# EUROPEAN PATENT APPLICATION

(11) **EP 1 148 085 A2**
(43) Date of publication of application: **24.10.2001**
(21) Application number: 01109398.6
(22) Date of filing: 19.04.2001
(51) Int. Cl.: C08J 9/00, C08K 3/34, A43B 17/10, C08L 21/00

(54) **Zeolite additive for rubber**

(30) Priority: 19.04.2000 US 552360; 02.10.2000 US 678162
(71) Applicant: Carcich, John, Campbell, California 95008 (US); Melzer, Nathan, Bonita, California 91902 (US)
(72) Inventor: Carcich, John, Campbell, California 95008 (US); Melzer, Nathan, Bonita, California 91902 (US)
(74) Representative: Wibbelmann, Jobst, Dr., Dipl.-Chem.

(57) **Abstract**

Rubber compositions are made using a rubber material and a zeolite. The rubber composition can be foamed or not, and can be made of natural or synthetic latex, or polyurethane. These compositions allow rubber to be water absorbent, even if the rubber is not foamed. They can be used for a wide variety of products, including, as examples, shoe inserts, bed pads, gasket materials, computer mouse pads, seating cushions, and the like. The rubber of the present invention can be easily regenerated by heating the rubber to between about 50°C and 150°C.

## Description

### BACKGROUND OF THE INVENTION

### Filed of the Invention

This invention relates to methods and apparatus to keep the insides of shoes smelling fresh; in particular, this invention relates to methods and apparatus that use absorbent and adsorbent materials in the shoe lining; and most particularly, this invention relates to methods and apparatus that provide reusable shoe liners and sole inserts to freshen the interior of shoes.

### State of the Art

Rubber is normally quite water repellant. It can be made to absorb moisture if it is foamed, but the moisture goes to the interstices of the rubber rather than into the rubber composition itself. It would be advantageous to have a rubber composition that absorbed at least some moisture as well as other components, such as ammonia and the like. An example of where such a composition would be advantageous is in the inner soles placed in athletic shoes and the like.

Feet, as other parts of the body, produce perspiration. This creates a continuous source of moisture on the interior of shoes. Since a foot confined in a shoe has little opportunity to shed this moisture, there is a problem of keeping the feet fresh. A variety of methods of keeping shoes smelling fresh and clean have been tried. Powders have been added to the shoe, and the like. One other method of preparing shoes for wearing includes the addition of a shoe insert to the interior of a shoe.

Zeolites can exclude molecules based on the molecular size of the molecule. They can exclude in the micro range (<2nm) or the meso-range (2 - 20 nm).

One important family of zeolites is alumino-silicates having the general empirical formula of M₂ₙO•Al₂O₃y•SiO₂w •H₂O, where y is 2 or greater, M is the charge of the balancing cation, such as sodium, potassium, magnesium and calcium, n is the cation valance, and w represents the number of moles of water contained in the zeolitic voids.

Of the 120 or so zeolites known to exist, about 50 are naturally occurring and the rest are synthetic. Commercially available naturally occurring zeolites include chabzite, eroionite, mordenite, and chinoptilolite. Other zeolites included faujasite, philipsite, zeolite A, zeolite L, Zeolite Y, zeolite X and ZSM-5. All these zeolites vary by the particulars of their cage structure and the pore size that can be excluded by the zoelites.

### SUMMARY OF THE INVENTION

This invention provides a rubber compositions are made using a rubber material and a zeolite. The rubber composition can be foamed or not, and can be made of natural or synthetic latex, or polyurethane. These compositions allow rubber to be water absorbent, even if the rubber is not foamed. They can be used for a wide variety of products, including, as examples, shoe inserts, bed pads, gasket materials, computer mouse pads, seating cushions, and the like. The rubber of the present invention can be easily regenerated by heating the rubber to between about 50°C and 150°C.

One aspect of this invention is a rubber composition comprising: between about 10 weight percent to 90 weight percent of a rubber material selected from the group consisting of natural rubber and synthetic rubber; between about 80 weight percent and 1 weight percent of a zeolite; and at least enough stabilizers and vulcanizers to stabilize the composition.

Another aspect of this invention is a method of making a rubber composition comprising: adding to a rubberized compound in its liquid state, a zeolite and at least one stabilizer; molding the liquid material; and shaping the solidified material.

Yet another aspect of this invention is a method of freshening the inside of shoes comprising: placing a renewable insert comprising a rubberized matrix and a zeolitic odor absorbent in the inside of the shoe.

### DETAILED DESCRIPTION OF THE PREFERRED EMBODIMENT

Rubber can be formulated with zeolite. The rubber used can be natural or synthetic latex or polyurethane foam. The rubber can be solid or foam, either open cell or closed cell foam. The resulting formulation has properties that include the ability of the rubber formulation to absorb water, even in formulations that are not foam rubber. The composition including between about 10 weight percent to 90 weight percent of a rubber material selected from the group consisting of natural rubber and synthetic rubber; and between about 85 weight percent and 1 weight percent of a zeolite. The composition may also contain at least 2 weight percent stabilizers.

The rubbers are either natural or synthetic. Natural rubber is the product of rubber trees and is mostly isoprenes. Synthetic rubbers include polyisoprene, styrene butadiene, nitrile rubbers, butyl rubbers, ethylene propylene terpolymers, silicone rubbers, neoprenes, polysufide, poly acetyl, eperchloride, fluporoelastomers, hypalon, halogenated butyl, polyurethanes, and thermoplastic rubbers. Stabilizers can include those selected from the group consisting of alkaline earth carbonates, and other alkali metal carbonates and alkaline earth carbonates, and other alkali metal bicarbonates.; for example, the composition of the stabilizer of alkaline earth carbonates is in the form of limestone, calcium carbonate, magnesium carbonate, sodium carbonate, potassium carbonate, sodium bicarbonate and potassium bicarbonate. Vulcanization ingredients include sulfur, TMTD (tetramethyl thioperoxide corbonic diamide or Thiran) and a host of others. Other additives include vulcanizer accelerants, peroxide cures, and retarders. For example, group II B metal oxides such as zinc oxide; Aflux 16; TMTD; MBT (2-Mercaptobezothiozole); and DPTT can be added. Various other ingredients can be included in a rubber formulation, for example, diethylene glycol, ehtylene glycol, and other poly-ethers. The color can be modified by adding, for example, MT Black. Paraffinic oil can give the final composition resilience and flexibility. Although new additives are being found, the technology of rubber formulation is quite old, and a comprehensive list of suitable additives can be found in Kirk-Othmer's *Concise Encyclopedia of Chemical Technology* (and the parent *Encyclopedia of Chemical Technology* in its various editions as well) 1985, John Wiley and Sons, New York under articles for Rubber and Rubber Compounds, which disclosure is incorporated in full herein.

This invention can absorb moisture into rubber--that is, the rubber incorporating zeolite is no longer hydrophobic. This invention can be used for shoe inserts, bed pads, gasket materials, computer mouse pads, seating cushions, and the like. There is no limitation to the uses for this invention. It can be used for hoses, foam rubber can be made either open cell and closed cell, rubber pipes, hospital pads, mattress pads, shoes, particularly shoes for sports, tennis, running, walking, jogging, it can be made with bi directional composts, leather shoe liners, shoe soles, heels, shoe inserts for tennis shoes, hockey shoes, ski shoes and the like, for injected molded rubber parts, filled and non filled with reinforces, rubber belts, reenforced by web material and non reenforced, tires, industrial and automobile gaskets, valves, air craft parts, roof liners, it can be used in sporting goods: for example, in tennis balls, baseballs, footballs, soccer, wet suits, golf balls, gloves, protective pads, skies, bats, helmets, liners for sports equipment and the like, rope, cooking utensils, storage tanks, pump propellers, air bladders, shocks absorbers and as clothing liners or as a component of the fabric incorporated into fabric. It can be formed by various extruded rubber methods, or using compression molding.

This invention allows the absorption of other components as well, particularly, in the case of shoe, ammonia and urea.

Once water and other substances have been absorbed into the rubber, and the rubber can no longer absorb moisture, the rubber can be regenerated by heating it to between about 50°C and 150°C for between about 30 minutes and 5 hours. Indeed, for many applications, the rubber can be regenerated by placing it out side in the sunlight for between about 30 minutes and eight hours.

One embodiment of products that can be made using this invention are shoe inserts. A shoe can be kept fresh by using a shoe insert that contains at least some zeolite. The zeolite absorbs odors and can then release these odors when the shoe insert is removed for airing out. Usually, just the act of removing the shoe from the foot will provide at least some airing of the insert, even if it is not removed from the shoe.

The insert is made of rubber or synthetic rubber, poly urethane, neoprene, and the like, and the zeolite is added as to the rubber mixture formulation. Between 1 weight percent and 85 weight percent of the formulation of the shoe insert will be zeolite. The balance of the mixture will be a mixture of between 25 weight percent and 75 weight percent rubber material and between 75 weight percent and 25 weight percent of a stabilizer. Preferred stabilizers include calcium and other alkaline earth carbonates, sodium and other alkali metal carbonates and bicarbonates. Similarly, sulfates, silicates, aluminate and the like can be used as the stabilizer for the insert composition of the shoe. It should be realized that the exact composition of the stabilizer is not critical to this invention, and any composition conventionally used for stabilization of rubber compositions can be beneficially used in the invention.

Nearly any zeolite can be used for the inserts of this invention. Molecular sieves having a pore size ranging from about 2 Angstroms to 100 Angstroms, preferably between about 3 angstroms to 20 Angstroms, can be used, as can any naturally or synthetically made zeolite including chabzite, eroionite, mordenite, chinoptilolite. faujasite, philipsite, zeolite A, zeolite L, Zeolite Y, zeolite X and ZSM-5. The key to an acceptable zeolite is that the pore size that characterizes the zeolite be of a size sufficient to capture water molecules. One particularly preferred zeolite is chinoptilolite.

The insert of the present invention can be made to fit inside a shoe, for example, in an athletic shoe or in an orthopedic shoe. Although, the insert will generally be used inside and on the bottom surface of an enclosed shoe, open shoes such as sandals, and the like can beneficially use the insert of the present invention. It should also be realized that the insert may be for the portion of the shoe between the shoe and the foot. The present invention can be used to freshen shoes and feet or to provide a means of providing a hygienic environment for the advancement of foot care for such diseases as athletes foot, and similar ailments.

It will be appreciated that the insert of the present invention can be made as a single molded piece or a plurality of pieces bonded together to form a more cushioned insert or a form fitting piece--indeed such form fitting pieces can be custom molded to fit a particular foot inside a particular shoe. It will also be realized that the rubber shoe insert of this invention containing zeolite can be used as a top layer to any other type of composition being used as a shoe insert.

### EXAMPLE

### Example 1

This example shows how to make a composition suitable for the insert of the present invention.

100 grams of naturally occurring chinoptilolite is added to a 100 grams of rubber in liquid state. The mixture is stirred for fifteen minutes then approximately 50 grams of calcium carbonate is added to the mixture.

The mixture is made into a long band, solidified and the shoe inserts are cut from the cooled band.

Similarly; other zeolite that can be substituted include chabzite, eroionite, mordenite, chinoptilolite. faujasite, philipsite, zeolite A, zeolite L, Zeolite Y, zeolite X and ZSM-5.

Similarly; other polymers that can be substituted include latexes made from isoprenes, polyisoprenes, styrene butadienes, nitrile rubbers, butyl rubbers, ethylene propylene terpolymers, silicone rubbers, neoprenes, polysufides, poly acetyls, eperchlorides, fluporoelastomers, hypalons, halogenated butyl, polyurethanes, and thermoplastic rubbers. The compositions can be hard or foamed.

Similarly; other stabilizers include sodium carbonate, magnesium carbonate and potassium carbonate.

### Example 2

The composition of claim one is cast in a mold the size and shape of a shoe sole.

### Example 3

In an alternative to Example 2, the composition of claim 1 may be formed as a single sheet, and inserts the size and shape of shoe inserts cut from the sheet.

### Example 4

Alternative compositions can be made by mixing ingredients.

Compound A, compound B, and compound C were made by mixing the ingredients together while liquid and slowly cooling the composition formed. The compounds were made and tested at the Burke-Mercer Flooring Products laboratories in San Jose, CA. The amounts of ingredients are listed in TABLE 1. The composition was foamed to make an open cell foam rubber. The various compositions were then tested.

Similarly, non-foam rubbers and closed foam rubbers may be made using the formulations listed above.

Similarly, latexes made from isoprenes, polyisoprenes, styrene butadienes, nitrile rubbers, butyl rubbers, ethylene propylene terpolymers, silicone rubbers, neoprenes, polysufides, poly acetyls, eperchlorides, fluporoelastomers, hypalon, halogenated butyls, polyurethanes, and thermoplastic rubbers synthetic rubbers, may be substituted for the rubber, BUNA, of the formulations listed above.

Similarly, accelerants, stabilizers, retarders and the like may be added to the formulations listed above to achieve the desired results.

**TABLE 1**

| ZEOLITE FORMULATIONS (amounts expressed as grams of ingredient) | | | |
|---|---|---|---|
| INGREDIENTS | COMPOUND A | COMPOUND B | COMPOUND C |
| BUNA EPT 6470 P | 100.00 | 100.00 | 100.00 |
| ZINC OXIDE | 5.00 | 5.00 | 5.00 |
| AFLUX 16 | 2.00 | 1.50 | 1.50 |
| TMTD | .50 | .50 | .50 |
| MBT | 1.50 | 1.50 | 1.50 |
| SULFUR | 1.50 | 1.50 | 1.50 |
| DPTT | .75 | .75 | .75 |
| DIETHYLENE GLYCOL | 2.00 | 2.00 | 2.00 |
| MT BLACK | 5.00 | 5.00 | 5.00 |
| GROUND LIMESTONE | 100.00 | 50.00 | 25.00 |
| ZEOLITE | 100.00 | 150.00 | 200.00 |
| PARAFFINIC OIL | 100.00 | 100.00 | 100.00 |

### Example 5

This example shows the properties of the Compound A made in Example 4.

Compound A, with 100.00 grams of clinoptolite, a zeolite, was made and tested. The compound had good abrasion resistance, and shape recovery after stretching.

### Example 6

This example shows the properties of the Compound B made in Example 4.

Compound B, with 150.00 grams of clinoptolite was made and tested. It had slightly less good abrasion resistence, although it was still well within the acceptable range. It also had slightly less good shape recovery.

### Example 7

This example shows the properties of the Compound C made in Example 4.

Compound C, with 200.00 grams of clinoptolite, failed both tests.

### Example 8

This example shows the regeneration of the rubber of this invention that has absorbed water.

A sample of rubber made as in example 5 is used as a shoe insert. After a day of use, the insert is taken from the shoe and set out in the sunlight for eight hours. The shoe insert is now essentially moisture free, and can be used again.

This invention has been described by reference to specific embodiments and examples thereof. Various modifications, changes and alterations of this invention will naturally suggest themselves to those skilled in the art. It is intended that all such modifications, changes and alterations of the invention be encompassed by the appended claims.

## Claims

1. A rubber composition comprising:
between about 10 weight percent to 90 weight percent of a rubber material selected from the group consisting of natural rubber and synthetic rubber; and
between about 85 weight percent and 5 weight percent of a zeolite.

2. The rubber composition of claim 1 wherein the rubber is a foamed rubber.

3. The rubber composition of claim 2 wherein the foamed rubber is selected from the group consisting of closed cell foam and open cell foam.

4. The rubber composition of claim 3 wherein the foamed rubber is selected from the group consisting of open cell foam rubber.

5. The rubber composition of claim 1 wherein the foamed rubber composition are latexes selected from the group consisting of natural latex, isoprenes, polyisoprenes, styrene butadienes, nitrile rubbers, butyl rubbers, ethylene propylene terpolymers, silicone rubbers, neoprenes, polysufide, poly acetyl, eperchloride, fluporoelastomers, hypalon, halogenated butyl, polyurethanes, and thermoplastic rubbers.

6. The rubber composition of claim 1 wherein the zeolite is selected from the group consisting of chabzite, eroionite, mordenite, chinoptilolite, faujasite, philipsite, zeolite A, zeolite L, Zeolite Y, zeolite X and ZSM-5.

7. The rubber composition of claim 6 wherein the zeolite is chinoptilolite.

8. The rubber composition of claim 1 wherein the composition further includes a stabilizer selected from the group consisting of alkaline earth carbonates, and other alkali metal carbonates and alkaline earth carbonates, and other alkali metal bicarbonates.

9. The rubber composition of claim 8 wherein the composition includes a stabilizer of alkaline earth carbonates in the form of limestone.

10. The rubber composition of claim 9 wherein the stabilizer is selected from the group consisting of calcium carbonate, magnesium carbonate, sodium carbonate, potassium carbonate, sodium bicarbonate and potassium bicarbonate.

11. A method of making a rubber composition comprising:
adding to a rubberized compound in its liquid state, and a zeolite;
molding the liquid material; and
shaping the solidified material.

12. The method of making a rubber composition of claim 11 wherein the rubberized carrier material is selected from the group of latexes consisting of natural latex, isoprenes, polyisoprenes, styrene butadienes, nitrile rubbers, butyl rubbers, ethylene propylenes terpolymers, silicone rubbers, neoprenes, polysufides, poly acetyls, eperchlorides, fluporoelastomers, hypalon, halogenated butyls, polyurethanes, and thermoplastic rubbers.

13. The method of making a rubber composition of claim 12 wherein the zeolite is selected from the group consisting of chabzite, eroionite, mordenite, chinoptilolite. faujasite, philipsite, zeolite A, zeolite L, Zeolite Y, zeolite X and ZSM-5.

14. The method of making a rubber composition of claim13 wherein the zeolite is chinoptilolite.

15. The method of making a rubber composition of claiml 1 wherein the formulation includes at least one stabilizer selected from the group consisting of alkaline earth carbonates, and other alkali metal carbonates and alkaline earth carbonates, and other alkali metal bicarbonates.

16. The method of making a rubber composition of claim 15 wherein the stabilizer is selected from the group consisting of calcium carbonate, magnesium carbonate, sodium carbonate, potassium carbonate, sodium bicarbonate and potassium bicarbonate.

17. The method of making a rubber composition of claim11 wherein the shaping step further comprises molding the insert from a liquid rubber zeolite composition.

18. The method of making a rubber composition of claim11 wherein the shaping step further comprises forming a sheet of a rubber zeolite composition, and cutting inserts of the appropriate size and shape.

19. A method of freshening the inside of shoes comprising:
placing a renewable insert comprising a rubberized matrix and a zeolitic odor absorbent in the inside of the shoe.

20. The method of claim 19 wherein the rubberized carrier material are selected from the group of latexes consisting of natural latex, isoprenes, polyisoprenes, styrene butadienes, nitrile rubbers, butyl rubbers, ethylene propylene terpolymers, silicone rubbers, neoprenes, polysufides, poly acetyls, eperchloride, fluporoelastomers, hypalon, halogenated butyl, polyurethanes, and thermoplastic rubbers.

21. The method of freshening the inside of shoes of claim 19 wherein the zeolite is selected from the group consisting of chabzite, eroionite, mordenite, chinoptilolite. faujasite, philipsite, zeolite A, zeolite L, Zeolite Y, zeolite X and ZSM-5.

22. The method of freshening the inside of shoes of claim 21 wherein the zeolite is chinoptilolite.

23. The method of freshening the inside of shoes of claim 19 wherein the stabilizer is selected from the group consisting of alkaline earth carbonates, and other alkali metal carbonates and alkaline earth carbonates, and other alkali metal bicarbonates.

24. The method of freshening the inside of shoes of claim 23 wherein the stabilizer is selected from the group consisting of calcium carbonate, magnesium carbonate, sodium carbonate, potassium carbonate, sodium bicarbonate and potassium bicarbonate.

25. The method of freshening the inside of shoes of claim 23 wherein the method further includes removing the shoe insert from the interior of the shoe and regenerating it by heating it to between about 50° and 150° for between about one hour and ten hours.

26. The method of freshening the inside of shoes of claim 25 wherein the insert is removed from the shoe and placed in direct sunlight for between about 4 to ten hours.
